# EUROPEAN PATENT SPECIFICATION

(11) **EP 4 094 280 B1**
(45) Date of publication and mention of the grant of the patent: **28.06.2023**
(21) Application number: 21706392.4
(22) Date of filing: 21.01.2021
(51) Int. Cl.: H01G 13/02, H01G 11/84, H01M 10/04, H01M 50/403, B65H 23/195, B65H 23/198, B29C 53/56, B29C 53/80, B65H 18/10, H01G 9/15

(54) **WINDING APPARATUS AND METHOD FOR THE PRODUCTION OF POWER STORAGE DEVICES**
WICKELVORRICHTUNG UND VERFAHREN ZUR HERSTELLUNG VON ENERGIESPEICHERVORRICHTUNGEN
APPAREIL ET PROCÉDÉ D'ENROULEMENT POUR LA PRODUCTION DE DISPOSITIFS DE STOCKAGE D'ÉNERGIE

(30) Priority: 21.01.2020 IT 202000001033
(43) Date of publication of application: 30.11.2022
(73) Proprietor: Manz Italy S.r.l., 40037 Sasso Marconi (BO) (IT)
(72) Inventor: NANNI, Fabrizio, 40037 Sasso Marconi (BO) (IT); BELLANO, Pietro, 40037 Sasso Marconi (BO) (IT)
(74) Representative: Studio Torta S.p.A.
(86) International application number: PCT/IB2021/050462
(87) International publication number: WO 2021/148982

(56) References cited:
- EP-A1- 3 205 614
- WO-A1-2004/059778
- WO-A1-2018/146638
- US-A1- 2017 133 703

## Description

### TECHNICAL FIELD

The present invention relates to a winding apparatus and a related method for the production of power storage devices. In particular, the present invention finds advantageous, but not exclusive, application in the production of rechargeable batteries, to which the following description will make explicit reference without thereby losing generality.

### BACKGROUND OF THE INVENTION

The production of rechargeable batteries generally comprises superimposing several layers of electrodes (with positive and negative polarity - cathode and anode) separated by a separator layer, which is designed to avoid any short circuits and to become impregnated with an electrolyte.

In recent years, various winding apparatuses have been developed for the production of power storage devices. In these apparatuses, the electrodes and the separator are usually wound around an oblong, non-circular core, so that the motion of the input material is usually inconsistent and inhomogeneous due to the non-circularity of the core.

Several compensation systems have been proposed in order to make the motion of the material fed to the winding apparatuses more consistent and homogeneous.

Document EP 2595233 A2 discloses an apparatus having a winding core, a compensation unit along the Y axis to compensate for the vertical movements of the input tape and a compensation unit along the X axis to compensate for tape speed changes due to the winding, so as to maintain a uniform tension on the tape.

Document KR 20140015994 A discloses a winding apparatus having an oblong-shaped rotating core and a tension regulating system which compensates for changes in tension generated by the shape of the winding core through a linear reciprocating motion, with an auxiliary regulating unit equipped with a swinging arm to which a tensioning roller is attached.

Document US 2006/0123622 A1 discloses a device for making power storage elements, with rolling cylinders for rolling sheets, wherein the rolled sections are wound by winding means comprising a mandrel having a shaped profile and a pressure roller which keeps it in contact.

Document WO 2018146638 discloses an apparatus provided with crank means and adapted to regulate the feeding of the material in a uniform manner.

Document EP 3205614 discloses a winding apparatus whose motors are independently controlled by means of electric cams so as to eliminate changes in position and speed of the input material.

Typically, in winding apparatuses (as for any body that rotates mainly in one direction), it is particularly complex to place electrical or pneumatic utilities (such as, for example, sensors, motors, pistons, etc.) on board the winding head (i.e., on the rotating part of the winding apparatus), since the said utilities are difficult to connect without causing entanglement of the supply (or signal transmission) cables or pipes, which inevitably leads to occlusion and subsequently to the breakage of the connections. Therefore, in the solutions of the prior art, the use of utilities on board a winding apparatus with compensation is particularly complex.

In recent years, it has been attempted to solve this problem by using sliding electrical contacts, which, however, make the structure extremely more complex, heavy, expensive and subject to wear.

Therefore, machine manufacturers prefer to use different apparatuses without utilities on board the winding head. However, this complicates the construction and assembly of the winding stations, which must comprise, in addition to the winding apparatus, auxiliary structures which compensate for the absence of utilities on board the head (such as, for example, sensors, gripping devices, opening devices, support devices, etc.).

Moreover, when sliding electrical contacts are used, the devices for gripping the material to be wound are substantially electrical, consequently more expensive and complex in terms of programming and installation than pneumatic devices, which however, in the prior art solutions, could not easily receive power.

In addition, the transmission of simple signals, such as those detected by photocells or electromagnetic sensors, is particularly complex and expensive to implement with sliding contacts. Therefore, this solution is usually discarded.

Furthermore, the transmission of an orbital motion to the winding head is generally complex and involves a plurality of eccentric actuations.

It is an object of the present invention to provide a winding apparatus and method, which allow the drawbacks of the prior art to be at least partially overcome, and at the same time, are easy and inexpensive to manufacture.

### SUMMARY

The present invention provides an apparatus according to claim 1 and a method for the production of power storage devices according to claim 13.

Embodiments of the invention are set forth with the appended dependent claims.

The claims describe preferred embodiments of the present invention forming an integral part of the present specification.

### BRIEF DESCRIPTION OF THE DRAWINGS

The present invention will now be described with reference to the accompanying drawings, which illustrate some non-limiting embodiments thereof, in which:
- Figure 1 is a perspective view of an apparatus in accordance with the present invention;
- Figure 2 is a schematic front view of the apparatus of Figure 1 in a first configuration;
- Figure 3 is a schematic front view of the apparatus of Figure 1 in a second configuration;
- Figure 4 is a sectional side view of the apparatus of Figures 1 to 3;
- Figure 5 is a perspective and schematic view of a detail of the apparatus in Figure 1; and
- Figure 6 is a graph showing diagrams as a function of time, position and angular velocity of a support and a core shown in Figures 2 and 3.

### DETAILED DESCRIPTION

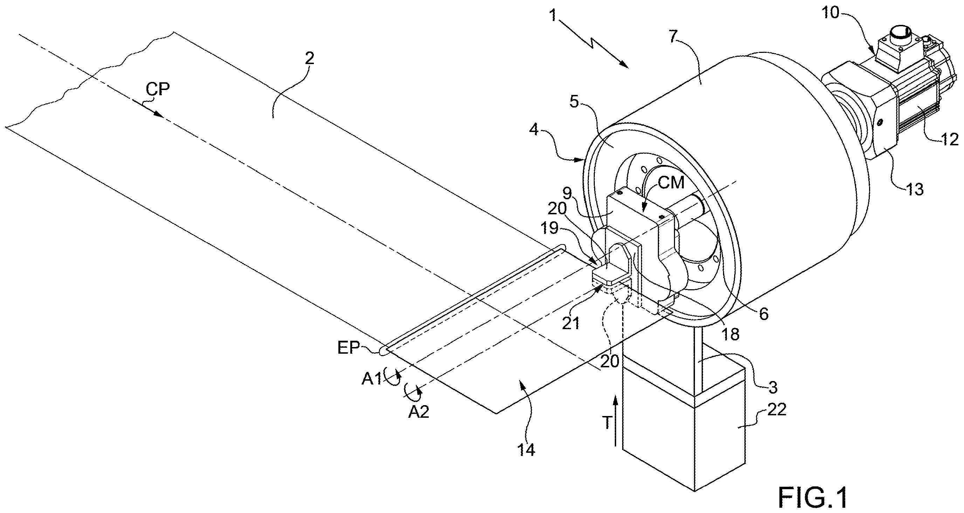

Number 1 in Figure 1 indicates, as a whole, a winding apparatus for the production of power storage devices. In particular, the winding apparatus 1 is configured to wind at least one planar-shaped material 2 such as, for example, a tape, a strip, a sheet, a film, etc.

Advantageously, but not necessarily, the material 2 comprises at least one electrode and/or at least one electrode separator (known per se and therefore not further described). More precisely, the material 2 comprises at least two electrode layers and two separator layers, respectively spaced apart from each other.

In some non-limiting embodiments, the material 2 comprises one or more continuous separator strips on which (and/or between which) a plurality of electrode blanks (both positive and negative) are arranged. In particular, the material 2 comprises two continuous separator strips between which a plurality of electrode blanks with a same first polarity (positive or negative) are arranged. More precisely, a plurality of electrode blanks with a same second polarity opposite to the first (negative or positive) are arranged in one of the outer portions (upper or lower) of the two separator layers.

Advantageously, but not necessarily, the apparatus 1 comprises feeding means (not shown, for example of a known type) for feeding the material 2 along a feeding plane FP (more precisely, along a conveying path CP - Figures 1-3). In particular, said feeding means comprise an unwinding reel for each continuous layer of material 2 (for example, two unwinding reels in the case of two separators separated by electrode blanks, or four unwinding reels in the case of two separator layers separated by two continuous electrode layers with opposite polarities).

The winding apparatus 1 comprises a frame 3 and an actuator device 4, which is supported by the frame 3 and in turn comprises at least a rotor 5 and a drive element 6.

Advantageously, but not necessarily, the drive element 6 is a drive shaft.

In the non-limiting embodiment of Figures 1 to 4, the actuator device 4 comprises a stator 7, which is mechanically connected to the frame 3 and magnetically connected to the rotor 5.

In other non-limiting embodiments, not shown, the rotor is any rotating part or wheel of a mechanism (for example, of a reducer).

Advantageously, but not necessarily, the actuator device 4 comprises an electric motor, in particular a torque motor (in other words, a motor with a high number of poles, which does not require a reducer for the transmission of motion). More precisely, the actuator device 4 is a torque motor with a through rotor 5 (i.e., perforated from side to side).

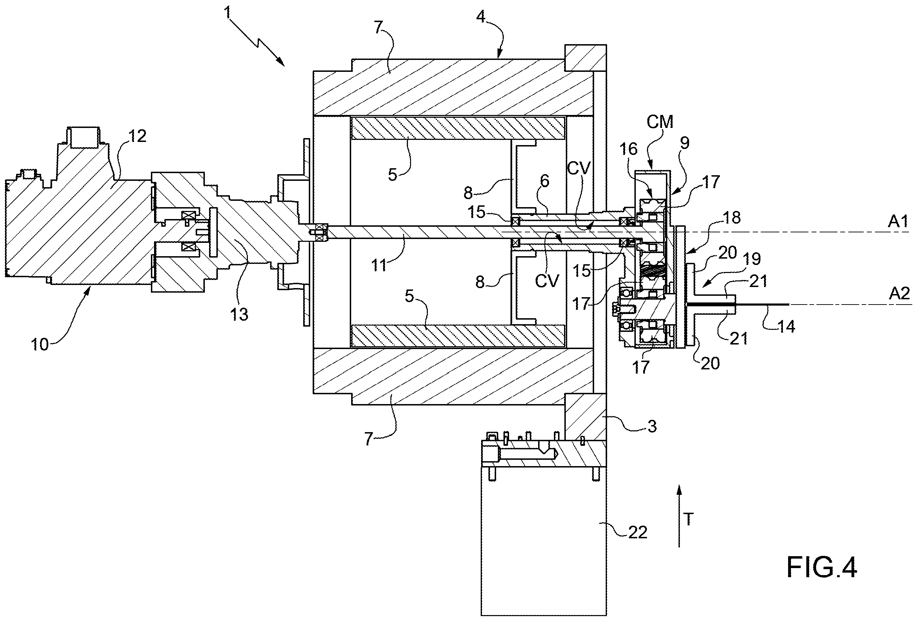

As shown in the non-limiting embodiment of Figure 4, the drive element 6 is mechanically connected to the rotor 5 of the actuator device 4, in particular through a flange 8.

The apparatus 1 further comprises a support 9, which is (configured to be) driven in rotation by the actuator device 4 through the drive element 6. In particular, the support 9 is mechanically connected to the drive element 6.

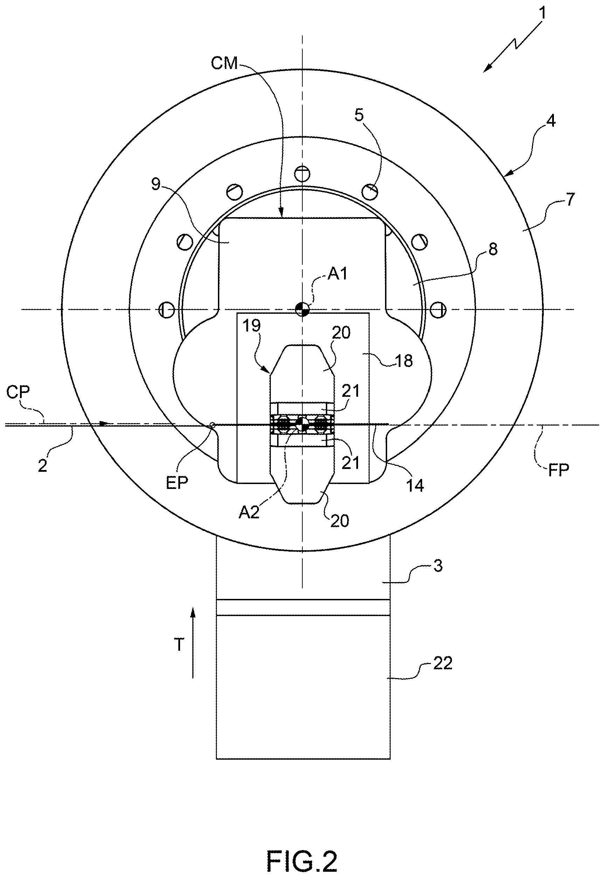

In the non-limiting embodiment of Figures 1 to 4, the actuator device 4 moves the rotor 5, which is integral with the drive element (shaft) 6, which in turn transmits the motion of the rotor 5 to the support 9. In particular, as shown in Figure 2, the actuator device 4 moves the support 9 around an axis A1. More particularly, the axis A1 is also the longitudinal axis of the drive element (shaft) 6.

Moreover, the apparatus 1 comprises an actuator device 10, in turn comprising a drive element 11. In particular, the actuator device 10 comprises an electric motor 12. More precisely, the actuator device 10 also comprises a reducer 13.

Advantageously, but not necessarily, the drive element 11 is a drive shaft.

In addition, the apparatus 1 comprises a non-circular core 14 on which to wind the material 2. The core 14 is arranged on the support 9 in a rotary manner and is (configured to be) driven in rotation by the actuator device 10 through the drive element 11.

In some non-limiting cases, the core 14 consists of a flat rigid (metal) pin. In particular, this rigid pin has a flat profile, in particular with rounded edges, so as to accompany the winding of the material 2 without damaging it due to a sharp profile.

In other non-limiting cases, the core 14 consists of the first cell (i.e., the unit comprising the first electrode blank along the conveying path CP) of a strip, i.e., the amount of material 2 required to form a complete winding for the production, for example, of a battery. The subsequent cells are wound around the first cell to form the complete winding. In this way, during the production process, it is not necessary to remove the metal pin; this operation generally involves the risk of damaging the final product.

Obviously, the core 14 can have any shape (polyhedral, elliptical, oval, rhomboidal, laminar, etc.) that allows winding.

Advantageously, the drive element 11 passes at least partially through the rotor 5.

In the non-limiting embodiment of Figure 2, the actuator device 10 is mounted on the opposite side of the device 4 with respect to the support 9. In particular, the drive element 11 passes through the rotor 5 of the actuator device 4 from side to side. In this way, it is possible to transmit the motion of the actuator device 10 (i.e., of the motor 12) inside the support 9, in particular to the core 14.

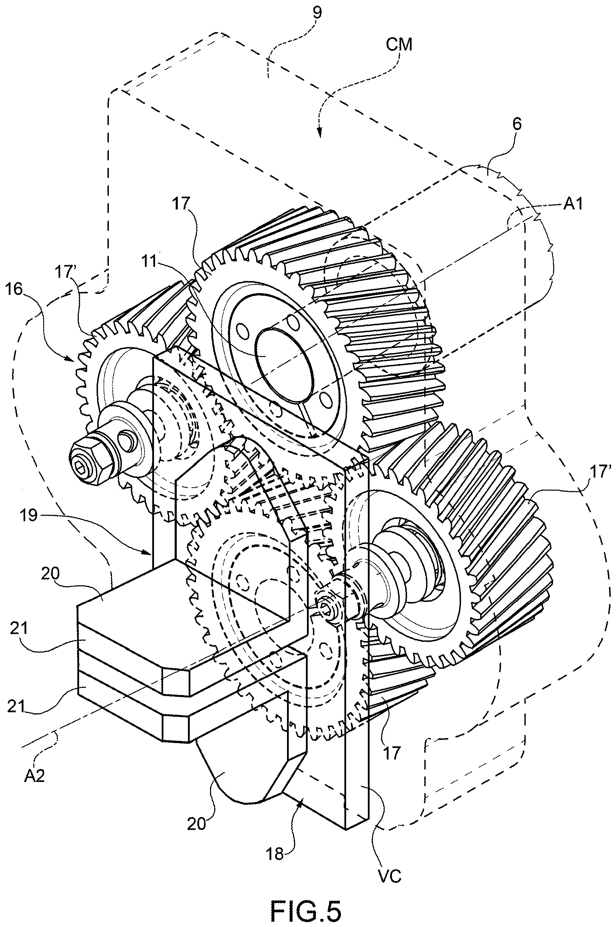

Advantageously, but not necessarily, and as shown in the non-limiting embodiment of Figures 4 and 5, the drive element (shaft) 6 and the drive element (shaft) 11 are coaxial. In particular, their longitudinal axis is the axis A1.

Advantageously, but not necessarily, the drive element 6 and the drive element 11 are concentric. In particular, the drive element 11 is housed inside the drive element 6 and is configured to rotate (independently) inside said drive element 6.

In the non-limiting embodiment of Figures 2 to 5, the drive element (shaft) 6 is a hollow shaft. In other words, the drive element 6 has a cavity CV which crosses it longitudinally from side to side.

In particular, the drive element (shaft) 11 crosses at least partially, in particular totally, the cavity CV.

In the non-limiting embodiment of Figure 4, the drive element 11 and the drive element 6 are connected to each other through a rotary coupling, in particular through bearings 15 (more precisely, rolling bearings - for example ball bearings). In this way, the drive element 6 and the drive element 11 can rotate independently of each other.

Advantageously, but not necessarily, the actuator device 4 and the actuator device 10 are configured to be moved independently of one another. In particular, the apparatus 1 comprises at least one control unit configured to control the actuator devices 4 and 10 independently of each other. More precisely, the control unit controls the actuator devices 4 and 10 through electronic cams, for example on the basis of the position of a virtual master axis.

In the non-limiting embodiment of Figures 1 to 3, the support 9 is configured to rotate around the axis A1 and the core 14 is configured to rotate around an axis A2 (Figures 2, 3 and 4). In particular, the axis A1 and the axis A2 are not coaxial with each other. More particularly, the axis A1 and the axis A2 are parallel to each other. In detail, the axis A1 and the axis A2 are perpendicular to the conveying path CP and parallel to the feeding plane FP.

Advantageously, but not necessarily, and as shown in the non-limiting embodiments of Figures 1 to 5, the support 9 is asymmetrical. More precisely, it has a larger volume where it supports the core 14, i.e., at the rotation axis A2. In this way, the total mass of the support 9 can be reduced. In particular, the support 9 comprises a counter-mass CM arranged in the opposite position, with respect to the axis A1, of the axis A2. The counter-mass has the function of balancing the inertia of the support 9 and preventing the vibrations that would be generated by the asymmetric distribution of the mass (by preventing vibrations, obviously wear is also reduced).

Advantageously, but not necessarily, the core 14 is mechanically coupled to (mounted on, supported or gripped by) the support 9 so as to perform an orbital winding motion. In particular, "orbital motion" means that the core 14 is configured to perform a rotational motion and a revolution motion.

In the non-limiting embodiment of Figures 1 to 4, the actuator device 4 moves (the support 9, and therefore) the core 14 around the axis A1, thus causing the revolution motion of the core 14 around said axis.

In the non-limiting embodiment of Figures 1 to 4, the actuator device 10 moves the core 14 around the axis A2, thus causing the rotational motion of the core 14 around said axis.

Therefore, the orbital motion with which the core 14 is moved comprises a rotation around the axis A2 and a revolution around the axis A1, which in use are (always) parallel to each other.

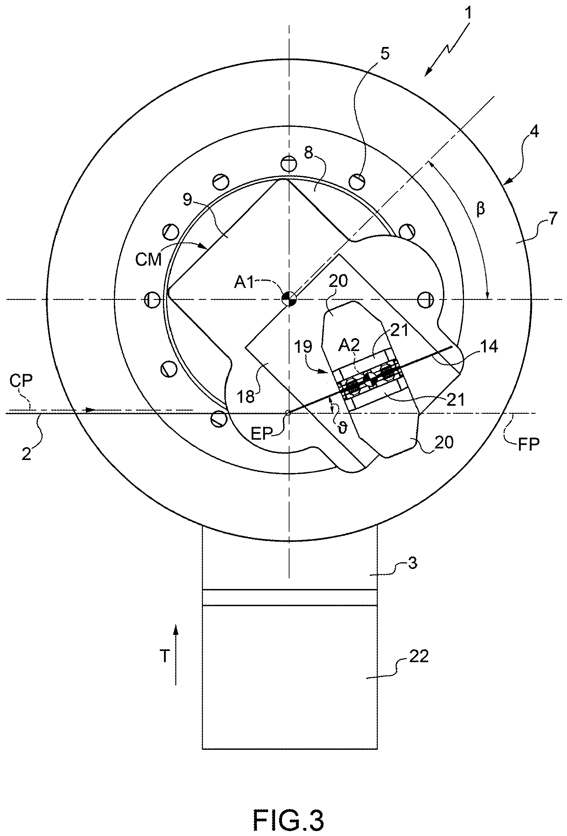

In the non-limiting embodiment of Figure 3, the apparatus 1 is shown in a configuration in which the winding around the core 14 has already begun and the material 2 is pulled along the conveying path CP. In particular, Figure 3 shows the angle θ, swept by the core 14, and the angle β, swept by the support 9.

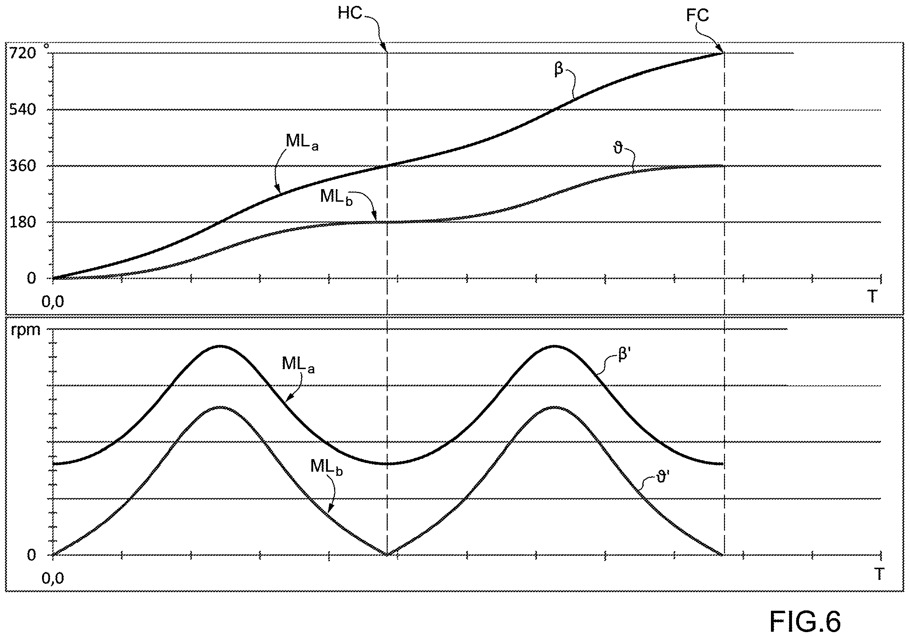

Figure 6 shows an upper diagram and a lower diagram relating to the change in time T of the positions θ and β of the core 14 and the support 9 and to the change in time T of the velocities (for example in mm/s and not necessarily on the same scale) θ' and β' of the core 14 and the support 9, respectively.

Advantageously, but not necessarily, and as shown in the non-limiting embodiment of Figure 6, a full cycle FC of the rotational motion (i.e., a full rotation of the core 14 around the axis A2) corresponds to two half cycles HC of the revolution motion (i.e., a full rotation of the support 9 around the axis A1). In this way, the entry point EP of the material 2 around the core 14 can be maintained at a constant height, i.e., in the feeding plane FP.

Advantageously, but not necessarily, and as shown in detail in Figure 5, the apparatus 1 (in particular the support 4) also comprises a motion transmission system 16 configured to transmit, in particular from the rotation axis A1 to the rotation axis A2, at least part of the motion of the actuator device 10 to the core 14. In particular, the support 9 is shaped so as to define a containing volume which contains at least part of the motion transmission system 16.

In the non-limiting embodiment of Figure 5, the motion transmission system 16 comprises gears 17, which are configured to transfer the motion of the actuator device 10 to the core 14.

Advantageously, but not necessarily, the motion transmission system 16 comprises (in particular two) intermediate gears 17'. In this way, it is possible to compensate for any clearance and to divide the torque transmitted by the gear 17 connected to the drive element (shaft) 11, so as to reduce wear. Moreover, the intermediate gears 17' allow the core to be moved in the same direction as the motor 12. Obviously, if the intermediate gears 17' were not present or there was a configuration with an even number of transmissions, the motor 12 would rotate in the opposite direction with respect to the core 14.

Advantageously, but not necessarily, the apparatus 1 comprises a pneumatic utility 18, in particular mounted on board the support 9. In particular, the supply pipes of the utility 18 also pass through the rotor 5, more precisely through the drive element (shaft) 6.

In the non-limiting embodiment of Figures 1 to 5, the apparatus comprises a gripping device 19 configured to grab the core 14 during the winding and to release it once the winding is completed. In particular, the gripping device 19 comprises gripping elements 20 having one end 21 of reduced, preferably, but not necessarily, decreasing dimensions (more precisely less than five millimetres, in particular less than one millimetre). In this way, the gripping elements 20 can be easily extracted from a complete winding.

Advantageously, but not necessarily, the pneumatic utility 18 comprises the gripping device 19. In particular, the gripping elements 20 are moved vertically (i.e., perpendicular to the feeding plane FP), so as to open and close according to the step of the winding process. More precisely, the elements 20 will be spaced apart, i.e., open, during the product feeding step, i.e., when the winding is completed, in order to free the complete winding and receive a new core 14 (for example, the first cell of a strip), whereas they will be closed from the beginning to the end of the actual winding step (during which the core 14 rotates).

Advantageously, but not necessarily, the pneumatic utility 18 comprises a vacuum chamber VC on board the support 9. In particular, the vacuum chamber VC has connections (flexible and not shown) which pass at least partially through the rotor 5 and are connected to a pump (not shown) on one side and to the vacuum chamber 20 on the other. In this way, it is possible to generate a pressure or a decompression to open and/or close the gripping elements, thus to grab and/or release the core 14 (either a pin or the first cell of the strip to be wound).

Advantageously, but not necessarily, the pneumatic utility 18 comprises a pneumatic joint, in particular a rotary joint.

In some non-limiting cases, not shown, the rotary joint connects the vacuum chamber 20 with a connection (flexible and not shown) which passes at least partially through the rotor 5 and is (instead) statically connected to the pump.

In other non-limiting cases, not shown, the rotary joint connects the pump with a connection (flexible and not shown) which passes at least partially through the rotor 5 and is (instead) statically connected to the vacuum chamber 20.

Advantageously, but not necessarily, the control unit (of a known type and not shown) is configured to control the actuator device 4 and the actuator device 10 with a motion law MLa and a motion law MLb, respectively (shown in the non-limiting embodiment of Figure 6). In particular, the motion law MLa is different from the motion law MLb. The term "motion law" refers to all formulas that determine the position, velocity, acceleration, jerk, etc. of a body.

Advantageously, but not necessarily, the apparatus 1 comprises an actuator device 22 configured to move the frame 3 along at least a transverse direction T, which is transverse, in particular perpendicular, to the feeding plane FP. In this way, it is possible to compensate, during the winding, for the build-up of material 2 wound around the core 14. In other words, during the winding, the thickness of the winding increases constantly every half cycle HC of the core 14 (in particular, it increases by the same amount as the thickness of the material 2) and therefore the actuator device 22 compensates for this increase by maintaining the input material 2 in the feeding plane FP (in particular, by maintaining an entry point EP in the feeding plane FP).

In accordance with a second aspect of the present invention, there is provided a winding method for the production of power storage devices using an apparatus 1 as described above. In particular, the method relates to the winding of at least one electrode and/or at least one separator. More precisely, the method relates to the winding of two electrode layers (or series of cells) with different polarities (anode and cathode) separated by two separator layers.

The method comprises a step of controlling the actuator device 4 and the actuator device 10 with a motion law MLa and a motion law MLb, respectively (shown in the non-limiting embodiment of Figure 5). In particular, the motion law MLa is different from the motion law MLb.

Advantageously, but not necessarily, the motion law MLa and the motion law MLb have a variable rotation speed (as shown in the lower graph in Figure 5).

In particular, the motion law MLa and the motion law MLb are calculated by the control unit based on at least one position of a portion of the core 14 or of a portion of the material 4 and at least one speed of a portion of the core or of a portion of the material.

Advantageously, but not necessarily, the motion laws MLa and MLb (and a possible third law of motion of the actuator device 22) are calculated so as to ensure that an entry point EP of the material 2 (Figure 4) remains constantly in the conveying plane CP. Moreover, the motion laws MLa and MLb (and a possible third law of motion of the actuator device 22) are calculated so as to maintain the tension of the material 2 entering the apparatus 1 always constant.

Advantageously, but not necessarily, the material 2 is wound by two apparatuses 1 arranged symmetrically to each other, so as to guide (in particular, to grab with the gripping elements) the core 14 on both sides, especially if it is the first cell of a strip.

In use, the material 2 is fed to the apparatus 1 in the form of a tape, which is divided into strips of desired length and configured to be wound around the core 14. In particular, the core 14 rotates both around the axis A1 and around the axis A2, performing the above mentioned orbital motion. During this orbital motion generated by the actuator devices 4 and 10, the material 2 is preferably pulled at constant speed and tension at the entry point EP. In particular, to ensure that the point EP remains in the feeding plane FP, each half-turn of the core around the axis A2 corresponds to a full turn of the support 9 around the axis A1.

During these rotations, the actuator device 22 moves the frame 3 along the direction T, in particular by a distance equal to the thickness of the material 2 each half-turn of the core 14. Once the winding is completed, i.e., after a certain number of half turns of the core 14, the actuator devices 4 and 10 stop, the material 2 is cut, the winding is closed, preferably by means of adhesive tape or glue, and conveyed to an unloading device, which is known per se and not shown (in particular, after opening the gripping elements and releasing the winding).

Although the invention described above makes particular reference to a very precise embodiment, it is not to be construed as limited to this embodiment, since all the variants, modifications or simplifications covered by the attached claims, such as, for example, a different geometry or composition of the core 14, a different type of actuator devices 4 and 10, or a different type of drive elements 6 and 11, etc., fall within its scope.

The apparatus and the method described above have many advantages.

First of all, they allow a regular and uniform feeding of the material to be wound (whether single- or multilayer) despite the fact that the winding core has a non-circular shape, thereby reducing the typical oscillations of apparatuses with flat cores. In addition, they allow a constant and uniform tension of the material 2. In this way, it is possible to reduce the turbulence suffered by the material and to guarantee the production of high-quality, high-efficiency power storage devices.

Moreover, the presence of the hollow rotor 5 allows passage and transmission with a simplified and inexpensive installation, for the generation of an orbital motion of the core 14.

Lastly, the presence of a cavity inside the rotor 5 allows utilities to be pneumatically and/or electrically connected on board the support 9, so as to prevent entanglement of the signal and power cables, therefore allowing an increase in the level of automation of the gripping device and of the apparatus in general, without the need for auxiliary devices.

## Claims

1. A winding apparatus (1) for the production of power storage devices; the apparatus (1) comprises:
- a frame (3);
- a first actuator device (4), which is supported by said frame (3) and comprises, in turn, at least a rotor (5) and a first drive element (6);
- a support (9), which is driven in rotation by the first actuator device (4) through the first drive element (6) ;
- a second actuator device (10) comprising a second drive element (11);
- a core (14) with a non-circular shape, on which to wind a material (2); said core (14) being arranged on said support (9) in a rotary manner and being driven in rotation by the second actuator device (10) through the second drive element (11);
the apparatus (1) being **characterized in that** the second drive element (11) at least partially passes through the rotor (5).

2. The apparatus (1) according to claim 1, wherein the first actuator device (4) and the second actuator device (10) are configured to be moved independently of one another.

3. The apparatus (1) according to claim 1 or 2, wherein the support (9) is configured to rotate around a first rotation axis (A1) and wherein the core (14) is configured to rotate around a second rotation axis (A2); the first rotation axis (A1) and the second rotation axis (A2) not being coaxial to one another; in particular, the first rotation axis (A1) and the second rotation axis (A2) being parallel to one another.

4. The apparatus (1) according to claim 3 and comprising a motion transmission system (16), which is configured to transmit, in particular from the first rotation axis (A1) to the second rotation axis (A2), at least part of the motion of the second actuator device (10) to the core (14); in particular, said support (9) being shaped so as to define a containing volume containing at least part of said motion transmission system (16).

5. The apparatus (1) according to any one of the preceding claims, wherein the first actuator device (4) is a torque motor.

6. The apparatus (1) according to any one of the preceding claims, wherein the second drive element (11) passes through the rotor (5) of the first actuator device (4) from side to side.

7. The apparatus (1) according to any one of the preceding claims, wherein the first drive element (6) and the second drive element (11) are coaxial.

8. The apparatus (1) according to any one of the preceding claims, wherein the first drive element (6) and the second drive element (11) are concentric; in particular, the second drive element (11) is housed inside the first drive element (6) and is configured to rotate inside said first drive element (6).

9. The apparatus (1) according to any one of the preceding claims and comprising a pneumatic utility (18), in particular mounted on board the support (9) and comprising a rotary pneumatic joint.

10. The apparatus (1) according to claim 9, wherein the pneumatic utility (18) comprises a gripping device (19) configured to grab the core (14).

11. The apparatus (1) according to any one of the preceding claims and comprising a control unit, which is configured to control said first actuator device (4) and said second actuator device (10) with a first motion law and a second motion law, respectively; in particular, the first motion law being different from the second motion law.

12. The apparatus (1) according to any one of the preceding claims and comprising a material feeding system (2) to feed the material along a feeding plane (FP) and a third actuator device (22) configured to move the frame (3) along at least a transverse direction (T), which is transverse, in particular perpendicular, to said feeding plane (FP), so as to compensate, during the winding, for the build-up of material (2) wound around the core (14).

13. A winding method for the production of power storage devices using an apparatus (1) according to any one of the preceding claims; in particular, to wind at least one electrode and/or at least one separator.

14. The method according to claim 13 and comprising a step of controlling the first actuator device (4) and the second actuator device (10) with a first motion law and a second motion law, respectively; in particular, the first motion law being different from the second motion law.

15. The method according to claim 14, wherein the first motion law and/or the second motion law have a variable rotation speed; in particular, the first motion law and the second motion law are calculated by a control unit based on at least one position of a portion of the core (14) or of a portion of the material (2) and at least one speed of a portion of the core (14) or of a portion of the material (2).

## Patentansprüche

1. Eine Wickelvorrichtung (1) für die Herstellung von Energiespeichereinheiten; die Vorrichtung (1) weist auf:
- einen Rahmen (3);
- eine erste Aktuatorvorrichtung (4), die von dem Rahmen (3) getragen wird und ihrerseits mindestens einen Rotor (5) und ein erstes Antriebselement (6) aufweist;
- ein Haltemittel (9), das von der ersten Aktuatorvorrichtung (4) über das erste Antriebselement (6) in Drehung versetzt wird;
- eine zweite Aktuatorvorrichtung (10), die ein zweites Antriebselement (11) aufweist;
- einen Kern (14) mit einer nicht kreisförmigen Form, auf den ein Material (2) aufgewickelt wird; wobei der Kern (14) auf dem Haltemittel (9) drehbar angeordnet ist und von der zweiten Aktuatorvorrichtung (10) über das zweite Antriebselement (11) in Drehung versetzt wird;
wobei die Vorrichtung (1) **dadurch gekennzeichnet ist, dass** das zweite Antriebselement (11) zumindest teilweise durch den Rotor (5) hindurch verläuft.

2. Die Vorrichtung (1) nach Anspruch 1, wobei die erste Aktuatorvorrichtung (4) und die zweite Aktuatorvorrichtung (10) ausgebildet sind, um unabhängig voneinander bewegt zu werden.

3. Die Vorrichtung (1) nach Anspruch 1 oder 2, wobei das Haltemittel (9) so ausgebildet ist, dass es sich um eine erste Drehachse (A1) dreht, und wobei der Kern (14) so ausgebildet ist, dass er sich um eine zweite Drehachse (A2) dreht; wobei die erste Drehachse (A1) und die zweite Drehachse (A2) nicht koaxial zueinander sind; wobei insbesondere die erste Drehachse (A1) und die zweite Drehachse (A2) parallel zueinander sind.

4. Die Vorrichtung (1) nach Anspruch 3 und mit einem Bewegungsübertragungssystem (16), das ausgebildet ist, um insbesondere von der ersten Drehachse (A1) zur zweiten Drehachse (A2) zumindest einen Teil der Bewegung der zweiten Aktuatorvorrichtung (10) auf den Kern (14) zu übertragen; wobei insbesondere die Haltemittelfläche (9) so geformt ist, dass sie ein Volumen definiert, das zumindest einen Teil des Bewegungsübertragungssystems (16) enthält.

5. Die Vorrichtung (1) nach einem der vorhergehenden Ansprüche, wobei die erste Aktuatorvorrichtung (4) ein Torquemotor ist.

6. Die Vorrichtung (1) nach einem der vorhergehenden Ansprüche, wobei das zweite Antriebselement (11) den Rotor (5) der ersten Aktuatorvorrichtung (4) von einer Seite zur anderen durchdringt.

7. Die Vorrichtung (1) nach einem der vorhergehenden Ansprüche, wobei das erste Antriebselement (6) und das zweite Antriebselement (11) koaxial sind.

8. Die Vorrichtung (1) nach einem der vorhergehenden Ansprüche, wobei das erste Antriebselement (6) und das zweite Antriebselement (11) konzentrisch sind; wobei insbesondere das zweite Antriebselement (11) innerhalb des ersten Antriebselements (6) untergebracht und so ausgebildet ist, dass es sich innerhalb des ersten Antriebselements (6) dreht.

9. Die Vorrichtung (1) nach einem der vorhergehenden Ansprüche und mit einem pneumatischen Werkzeug (18), das insbesondere an Bord des Haltemittels (9) montiert ist und ein pneumatisches Drehgelenk aufweist.

10. Die Vorrichtung (1) nach Anspruch 9, wobei das pneumatische Werkzeug (18) eine Greifvorrichtung (19) aufweist, die ausgebildet ist, um den Kern (14) zu greifen.

11. Die Vorrichtung (1) nach einem der vorhergehenden Ansprüche und mit einer Steuereinheit, die ausgebildet ist, die erste Aktuatorvorrichtung (4) und die zweite Aktuatorvorrichtung (10) mit einem ersten Bewegungsgesetz bzw. einem zweiten Bewegungsgesetz zu regeln, wobei sich insbesondere das erste Bewegungsgesetz von dem zweiten Bewegungsgesetz unterscheidet.

12. Die Vorrichtung (1) nach einem der vorhergehenden Ansprüche und mit einem Materialzuführungssystem (2) zum Zuführen des Materials entlang einer Zuführebene (FP) und einer dritten Aktuatorvorrichtung (22), die ausgebildet ist, um den Rahmen (3) entlang mindestens einer Querrichtung (T) zu bewegen, die quer, insbesondere senkrecht, zu der Zuführebene (FP) verläuft, um während des Aufwickelns den Aufbau von um den Kern (14) gewickeltem Material (2) zu kompensieren.

13. Ein Verfahren zur Herstellung von Energiespeichereinheiten unter Verwendung einer Vorrichtung (1) nach einem der vorhergehenden Ansprüche, insbesondere zum Wickeln mindestens einer Elektrode und/oder mindestens eines Separators.

14. Das Verfahren nach Anspruch 13, das einen Schritt aufweist, bei dem die erste Aktuatorvorrichtung (4) und die zweite Aktuatorvorrichtung (10) mit einem ersten Bewegungsgesetz bzw. einem zweiten Bewegungsgesetz geregelt werden, wobei sich insbesondere das erste Bewegungsgesetz von dem zweiten Bewegungsgesetz unterscheidet.

15. Das Verfahren nach Anspruch 14, wobei das erste Bewegungsgesetz und/oder das zweite Bewegungsgesetz eine variable Rotationsgeschwindigkeit aufweisen; insbesondere werden das erste Bewegungsgesetz und das zweite Bewegungsgesetz von einer Steuereinheit auf der Grundlage mindestens einer Position eines Teils des Kerns (14) oder eines Teils des Materials (2) und mindestens einer Geschwindigkeit eines Teils des Kerns (14) oder eines Teils des Materials (2) berechnet.

## Revendications

1. Appareil d'enroulement (1) pour la production de dispositifs de stockage d'énergie ; l'appareil (1) comprend :
- un cadre (3) ;
- un premier dispositif d'actionnement (4), qui est supporté par ledit cadre (3) et qui comprend quant à lui au moins un rotor (5) et un premier élément d'entraînement (6) ;
- un support (9), qui est entraîné en rotation par le premier dispositif d'actionnement (4) par l'intermédiaire du premier élément d'entraînement (6) ;
- un deuxième dispositif d'actionnement (10) comprenant un deuxième élément d'entraînement (11) ;
- un noyau (14) de forme non circulaire, sur lequel est destiné à s'enrouler un matériau (2) ; ledit noyau (14) étant disposé sur ledit support (9) d'une manière rotative et étant entraîné en rotation par le deuxième dispositif d'actionnement (10) par l'intermédiaire du deuxième élément d'entraînement (11) ;
l'appareil (1) étant **caractérisé en ce que** le deuxième élément d'entraînement (11) traverse au moins partiellement le rotor (5).

2. Appareil (1) selon la revendication 1, dans lequel le premier dispositif d'actionnement (4) et le deuxième dispositif d'actionnement (10) sont configurés pour être déplacés indépendamment l'un de l'autre.

3. Appareil (1) selon la revendication 1 ou 2, dans lequel le support (9) est configuré pour tourner autour d'un premier axe de rotation (A1) et dans lequel le noyau (14) est configuré pour tourner autour d'un deuxième axe de rotation (A2) ; le premier axe de rotation (A1) et le deuxième axe de rotation (A2) n'étant pas coaxiaux l'un par rapport à l'autre ; en particulier, le premier axe de rotation (A1) et le deuxième axe de rotation (A2) étant parallèles l'un par rapport à l'autre.

4. Appareil (1) selon la revendication 3 et comprenant un système de transmission de mouvement (16), configuré pour transmettre, notamment du premier axe de rotation (A1) au deuxième axe de rotation (A2), au moins une partie du mouvement du deuxième dispositif d'actionnement (10) au noyau (14) ; en particulier, ledit support (9) étant configuré de manière à définir un volume contenant au moins une partie dudit système de transmission de mouvement (16).

5. Appareil (1) selon l'une quelconque des revendications précédentes, dans lequel le premier dispositif d'actionnement (4) est un moteur couple.

6. Appareil (1) selon l'une quelconque des revendications précédentes, dans lequel le deuxième élément d'entraînement (11) traverse le rotor (5) du premier dispositif d'actionnement (4) d'un côté à l'autre.

7. Appareil (1) selon l'une quelconque des revendications précédentes, dans lequel le premier élément d'entraînement (6) et le deuxième élément d'entraînement (11) sont coaxiaux.

8. Appareil (1) selon l'une quelconque des revendications précédentes, dans lequel le premier élément d'entraînement (6) et le deuxième élément d'entraînement (11) sont concentriques ; en particulier, le deuxième élément de d'entraînement (11) est logé à l'intérieur du premier élément d'entraînement (6) et est configuré pour tourner à l'intérieur dudit premier élément d'entraînement (6).

9. Appareil (1) selon l'une quelconque des revendications précédentes et comprenant un utilitaire pneumatique (18), notamment monté à bord du support (9) et comprenant un joint pneumatique rotatif.

10. Appareil (1) selon la revendication 9, dans lequel l'utilitaire pneumatique (18) comprend un dispositif de préhension (19) configuré pour saisir le noyau (14).

11. Appareil (1) selon l'une quelconque des revendications précédentes et comprenant une unité de commande, qui est configurée pour commander ledit premier dispositif d'actionnement (4) et ledit deuxième dispositif d'actionnement (10) selon, respectivement, une première loi de mouvement et une seconde loi de mouvement ; en particulier, la première loi de mouvement étant différente de la seconde loi de mouvement.

12. Appareil (1) selon l'une quelconque des revendications précédentes et comprenant un système d'alimentation en matériau (2) pour introduire le matériau le long d'un plan d'alimentation (FP) et un troisième dispositif d'actionnement (22) configuré pour déplacer le cadre (3) le long d'au moins une direction transversale (T), qui est transversale, notamment perpendiculaire, audit plan d'alimentation (FP), de manière à compenser, au cours de l'enroulement, l'accumulation de matériau (2) enroulé autour du noyau (14).

13. Procédé d'enroulement pour la production de dispositifs de stockage d'énergie utilisant un appareil (1) selon l'une quelconque des revendications précédentes ; en particulier, pour enrouler au moins une électrode et/ou au moins un séparateur.

14. Procédé selon la revendication 13 et comprenant une étape de commande du premier dispositif d'actionnement (4) et du deuxième dispositif d'actionnement (10) respectivement selon une première loi de mouvement et selon une deuxième loi de mouvement ; en particulier, la première loi de mouvement étant différente de la deuxième loi de mouvement.

15. Procédé selon la revendication 14, dans lequel la première loi de mouvement et/ou la deuxième loi de mouvement ont une vitesse de rotation variable ; en particulier, la première loi de mouvement et la deuxième loi de mouvement sont calculées par une unité de commande en fonction d'au moins une position d'une partie du noyau (14) ou d'une partie du matériau (2) et d'au moins une vitesse d'une partie du noyau (14) ou d'une partie du matériau (2).
